# EUROPÄISCHE PATENTSCHRIFT

(11) **EP 3 408 634 B1**
(45) Veröffentlichungstag und Bekanntmachung des Hinweises auf die Patenterteilung: **05.02.2020**
(21) Anmeldenummer: 16804798.3
(22) Anmeldetag: 30.11.2016
(51) Int. Cl.: G01M 1/28

(54) **VERFAHREN UND VORRICHTUNG ZUR DETEKTION DER AZIMUTALEN WINKELPOSITION EINER RADUNWUCHT BEI EINEM RAD AN EINEM FAHRZEUG**
METHOD AND DEVICE FOR DETECTING THE AZIMUTHAL ANGULAR POSITION OF A WHEEL IMBALANCE OF A WHEEL ON A VEHICLE
PROCÉDÉ ET DISPOSITIF DE DÉTECTION DE LA POSITION ANGULAIRE AZIMUTALE D'UN BALOURD D'UNE ROUE DE VÉHICULE

(30) Priorität: 29.01.2016 DE 102016201331
(43) Veröffentlichungstag der Anmeldung: 05.12.2018
(73) Patentinhaber: Robert Bosch GmbH, 70442 Stuttgart (DE)
(72) Erfinder: WAGNER, Marcus, 74348 Lauffen (DE); SCHEUING, Jan, 74336 Brackenheim (DE); MALIPATIL, Vishwanath, 74081 Heilbronn (DE)
(86) Internationale Anmeldenummer: PCT/EP2016/079352
(87) Internationale Veröffentlichungsnummer: WO 2017/129292

(56) Entgegenhaltungen:
- DE-A1-102010 020 289
- DE-A1-102014 100 126
- GB-A- 2 410 803

## Beschreibung

### Stand der Technik

Aus der gattungsbildenden DE 10 2010 020 289 A1 sind ein System und ein Verfahren, um während des Betriebs eines Fahrzeugs zu bestimmen, ob ein bestimmtes Rad an dem Fahrzeug eine Unwucht aufweist, bekannt. Das Verfahren enthält das Liefern von Radwinkelsignalen von den Rädern des Fahrzeugs und das Liefern eines Schwingungsmessungssignals von einem Antwortpunkt an dem Fahrzeug wie etwa von einem Beschleunigungsmesser an einer Lenksäule des Fahrzeugs. Das Verfahren enthält außerdem das Erzeugen eines Regressionsvektors unter Verwendung der Radwinkelsignale. Das Verfahren enthält außerdem das Erzeugen eines geschätzten Parametervektors unter Verwendung eines rekursiven Algorithmus der kleinsten Quadrate, des Regressionsvektors und des Schwingungsmessungssignals. Daraufhin berechnet das Verfahren unter Verwendung des geschätzten Parametervektors einen Unwuchtbetragswert jedes Rads des Fahrzeugs. Das Verfahren verwendet eine Prüfung der Beständigkeit gegen Anregung, um zu bestimmen, ob der Parametervektor zu einem wahren Wert konvergiert ist, um zu bestimmen, ob die berechneten Unwuchtbetragswerte genau sind.

Aus der GB 2 410 803 A ist ein Verfahren zur Auswuchtung eines Rades bekannt, mittels derer der Ort und die Masse eines zur Behebung der Unwucht am Rad anzubringenden Gewichtes ermittelt werden.

Aus der DE 197 35 313 A1 ist ein Verfahren zur Ermittlung von geschwindigkeitsunabhängigen Frequenzen eines Nutzsignalanteils bekannt. Dieses Verfahren nutzt das systematische Wiederkehren von Fehlern im mittels Drehzahlsensoren erfassten Geschwindigkeitssignal aus, um z.B. eine Unwucht zu erfassen.

Die Merkmale des Oberbegriffs von Anspruch 1 sind der DE 10 2010 020 289 A1 entnommen.

### Offenbarung der Erfindung

Die Erfindung betrifft ein Verfahren zur Ermittlung einer die azimutale Winkelposition einer Radunwucht bei einem Rad an einem Fahrzeug beschreibenden Unwuchtwinkelgröße, bei dem
- anhand der Ausgangssignale eines dem Rad zugeordneten Raddrehzahlfühlers das Vorhandensein einer Radunwucht detektiert wird,
- wenigstens eine die momentane Fahrsituation beschreibende Fahrdynamikgröße ermittelt wird ,
- abhängig von der Fahrdynamikgröße eine den azimutalen Winkel zwischen der Radunwucht und dem Raddrehzahlsensor beschreibende erste Winkelgröße ermittelt wird,
- eine den azimutalen Winkel zwischen dem Raddrehzahlsensor und einem Bezugspunkt am Rad beschreibende zweite Winkelgröße ermittelt wird und
- abhängig von der ersten Winkelgröße und der zweiten Winkelgröße eine den azimutalen Winkel zwischen der Radunwucht und dem Bezugspunkt am Rad beschreibende Unwuchtwinkelgröße ermittelt wird.

Zahlreiche Fahrdynamikgrößen werden üblicherweise in den Steuergeräten moderner Fahrzeuge bereits ermittelt und auch Raddrehzahlfühler gehören zur Serienausstattung moderner Fahrzeuge. Bei der ersten Winkelgröße handelt es um den azimutalen Winkel zwischen der Unwucht in der Radebene gegenüber dem Drehzahlfühler bzw. Raddrehzahlsensor. Dieser azimutale Winkel kann anschaulich so verstanden werden, dass sich eine Radunwucht phasenversetzt im Ausgangssignal des Drehzahlfühlers äußert. D.h. zum Zeitpunkt des Erfassens der Radunwucht mittels des Drehzahlfühlersignals hat sich das Rad bereits um einen gewissen Winkel, nämlich die erste Winkelgröße, weitergedreht. Aus der Kenntnis der ersten und der zweiten Winkelgröße, d.h. anhand der Winkel Unwucht-Raddrehzahlsensor und Raddrehzahlsensor-Bezugspunkt lässt sich leicht der Winkel zwischen der Radunwucht und dem Bezugspunkt ermitteln. Anhand dieses Winkels kann in einer Werkstätte leicht die Position der Unwucht festgestellt werden.

Beispielsweise kann dem Radventil die Winkelposition Null zugeordnet werden und die Unwuchtwinkelgröße ist nun auf das Radventil bezogen. Ein Winkel von 360 Grad führt wieder zum Radventil zurück.

Eine vorteilhafte Ausgestaltung der Erfindung ist dadurch gekennzeichnet, dass die erste Winkelgröße aus der wenigstens einen Fahrdynamikgröße mittels einer im Fahrzeug hinterlegten oder auf drahtlosem Wege verfügbaren Datenbank ermittelt wird.

Eine vorteilhafte Ausgestaltung der Erfindung ist dadurch gekennzeichnet, dass es sich bei der Fahrdynamikgröße um die Fahrzeuglängsgeschwindigkeit handelt.

Eine vorteilhafte Ausgestaltung der Erfindung ist dadurch gekennzeichnet, dass es sich bei dem Bezugspunkt um das Radventil handelt. Dieser Punkt ist besonders einfach lokalisierbar und erfordert keine separate Markierung oder Kennzeichnung mehr.

Eine vorteilhafte Ausgestaltung der Erfindung ist dadurch gekennzeichnet, dass die Datenbank anhand von definierten Fahrmanövern erstellt wird, welche mit einem Fahrzeug des betreffenden Typs in einer Applikationsphase bzw. Kalibrierungsphase gefahren werden, wobei bei dem Fahrzeug an wenigstens einem Rad eine definierte Radunwucht an einer bzgl. des Azimutalwinkels zwischen der Radunwucht und dem Bezugspunkt definierten Position angebracht wird.

Eine vorteilhafte Ausgestaltung der Erfindung ist dadurch gekennzeichnet, dass die definierten Fahrmanöver Fahrtintervalle mit konstanter Geschwindigkeit umfassen, wobei die konstante Geschwindigkeit in den unterschiedlichen Fahrtintervallen unterschiedlich ist.

Eine vorteilhafte Ausgestaltung der Erfindung ist dadurch gekennzeichnet, dass eine Radunwucht dann als vorliegend detektiert wird, wenn das Ausgangssignal des Raddrehzahlfühlers eine sich mit jeder Radumdrehung wiederholende Störung liefert.

Eine vorteilhafte Ausgestaltung der Erfindung ist dadurch gekennzeichnet, dass es sich bei der Störung um eine kurzzeitige Signalüberhöhung handelt.

Weiter umfasst die Erfindung eine Vorrichtung, enthaltend Mittel, die zur Durchführung der erfindungsgemäßen Verfahren ausgestaltet sind. Dabei handelt es sich insbesondere um ein Steuergerät, in welchem der Programmcode zur Durchführung der erfindungsgemäßen Verfahren hinterlegt ist.

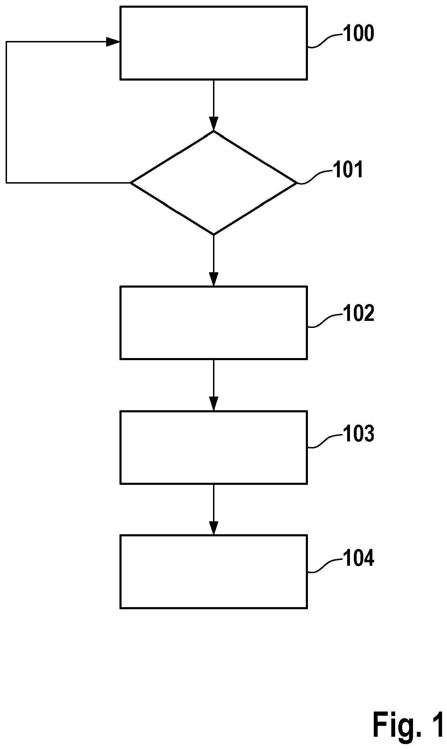

Die Zeichnung umfasst Fig. 1.

In Fig. 1 ist der Ablauf einer Ausführungsform des erfindungsgemäßen Verfahrens dargestellt.

Radunwuchten sind im Ausgangssignal eines Raddrehzahlsensors anhand einer periodisch mit jeder Radumdrehung wiederkehrenden Störung der Radgeschwindigkeit erkennbar. Der Kern der Erfindung besteht darin, dass auch die azimutale Position der Radunwucht, z.B. der azimutale Winkel gegenüber dem Radventil, anhand des Raddrehzahlsignals ermittelt wird. Es hat sich dabei herausgestellt, dass die periodische Störung im Raddrehzahlsignal erst phasenversetzt erkennbar ist. D.h. zu demjenigen Zeitpunkt, zu welchem der Drehzahlfühler die Signalstörung erfasst, hat die Unwucht den Drehzahlfühler bereits passiert. Weiter hat sich herausgestellt, dass dieser Phasenversatz stark vom konkreten Fahrzeugtyp sowie von der momentan vorliegenden Fahrzeuggeschwindigkeit abhängt. Deshalb werden in Applikationsphase die Räder des betrachteten Fahrzeugtyps mit einem definierten Unwuchtgewicht versehen, welches an einer definierten Position angebracht ist. Die Applikation bzw. Kalibrierung sollte für alle Räder des Fahrzeugs, zumindest aber für ein Rad pro Achse durchgeführt werden.

Mit dem Fahrzeug mit derart präparierten Rädern werden definierte Fahrmanöver gefahren, welche insbesondere auch Abschnitte mit definierter Fahrzeuggeschwindigkeit umfassen. Durch die bewusste Präparation der Räder mit der an einer definierten Stelle angebrachten Unwucht ist die aktuelle azimutale Position der Unwucht zu jedem Zeitpunkt bekannt. Deshalb ist es auch bekannt, an welcher azimutalen Position die Unwucht sich tatsächlich befindet, wenn diese sich als Signalstörung im Drehzahlfühlersignal äußert. Aus dieser Kenntnis kann die Phasenverschiebung ermittelt werden.

Die Durchführung und Auswertung dieser definierten Fahrmanöver erlaubt die Aufstellung einer Datenbank, welche die zu vorgegebenen Geschwindigkeitswerten zugehörigen Phasenverschiebungen umfasst. Hier sei nochmals betont, dass die Einträge in dieser Datenbank keine für alle beliebigen Fahrzeuge geltenden Zusammenhänge sind, sondern für jedes Fahrzeugmodell bzw. Fahrzeugtyp unterschiedlich sind. Dies ist insbesondere durch das unterschiedliche Federungs- und Dämpfungsverhalten von unterschiedlichen Fahrzeugtypen bedingt.

Wird nun später im realen Fahrbetrieb mit nicht präparierten Rädern anhand eines Drehzahlfühlersignals eine Unwucht festgestellt, dann kann anhand der aktuellen Fahrzeuggeschwindigkeit aus der Datenbank der zugehörige Phasenversatz ermittelt werden und damit auch die azimutale Position der Unwucht. Diese Position kann beispielsweise auf drahtlosem Wege direkt an eine Werkstatt übermittelt werden oder in einem Fehlerspeicher des Steuergeräts festgehalten werden, so dass ein späteres Auswuchten des Rades einfacher und präziser ausgeführt werden kann.

In Fig. 1 ist der Ablauf einer Ausgestaltung des erfindungsgemäßen Verfahrens dargestellt. Nach dem Start des Verfahrens in Block 100 wird in Block 101 überprüft, ob eine Radunwucht vorhanden ist. Ist dies nicht der Fall, dann wird zu Block 100 zurückgekehrt. Ist jedoch eine Radunwucht vorhanden, dann wird in Block 102 die aktuelle Fahrzeuggeschwindigkeit ermittelt bzw. aus einem Speichermittel ausgelesen und in Block 103 wird danach abhängig von der aktuellen Fahrzeuggeschwindigkeit die azimutale Winkelposition der Radunwucht ermittelt. In Block 104 endet das Verfahren.

## Patentansprüche

1. Verfahren zur Ermittlung einer die azimutale Winkelposition einer Radunwucht bei einem Rad an einem Fahrzeug beschreibenden Unwuchtwinkelgröße, bei dem
- anhand der Ausgangssignale eines dem Rad zugeordneten Raddrehzahlfühlers das Vorhandensein einer Radunwucht detektiert wird (101),
- wenigstens eine die momentane Fahrsituation beschreibende Fahrdynamikgröße ermittelt wird (102),
daduch gekennzeichnet, dass
- abhängig von der Fahrdynamikgröße eine den azimutalen Winkel zwischen der Radunwucht und dem Raddrehzahlfühler beschreibende erste Winkelgröße ermittelt wird,
- eine den azimutalen Winkel zwischen dem Raddrehzalfühler und einem Bezugspunkt am Rad beschreibende zweite Winkelgröße ermittelt wird und
- abhängig von der ersten Winkelgröße und der zweiten Winkelgröße eine den azimutalen Winkel zwischen der Radunwucht und dem Bezugspunkt am Rad beschreibende Unwuchtwinkelgröße ermittelt wird (103).

2. Verfahren nach Anspruch 1, **dadurch gekennzeichnet, dass** die erste Winkelgröße aus der wenigstens einen Fahrdynamikgröße mittels einer im Fahrzeug hinterlegten oder auf drahtlosem Wege verfügbaren Datenbank ermittelt wird.

3. Verfahren nach Anspruch 1, **dadurch gekennzeichnet, dass** es sich bei der Fahrdynamikgröße um die Fahrzeuglängsgeschwindigkeit handelt.

4. Verfahren nach Anspruch 1, **dadurch gekennzeichnet, dass** es sich bei dem Bezugspunkt um ein Radventil handelt.

5. Verfahren nach Anspruch 2, **dadurch gekennzeichnet, dass** die Datenbank anhand von definierten Fahrmanövern erstellt wird, welche mit einem Fahrzeug des betreffenden Typs in einer Applikationsphase gefahren werden, wobei bei dem Fahrzeug an wenigstens einem Rad eine definierte Radunwucht an einer bzgl. des Azimutalwinkels zwischen der Radunwucht und dem Bezugspunkt definierten Position angebracht wird.

6. Verfahren nach Anspruch 5, **dadurch gekennzeichnet, dass** die definierten Fahrmanöver Fahrtintervalle mit während des Fahrtintervalls konstantem Wert der fahrdynamischen Größe umfassen, wobei der konstante Wert in den in den unterschiedlichen Fahrtintervallen unterschiedlich ist.

7. Verfahren nach Anspruch 1, **dadurch gekennzeichnet, dass** eine Radunwucht dann als vorliegend detektiert wird, wenn das Ausgangssignal des Raddrehzahlfühlers eine sich mit jeder Radumdrehung wiederholende Störung liefert.

8. Verfahren nach Anspruch 7, **dadurch gekennzeichnet, dass** es sich bei der Störung um eine kurzzeitige Signalüberhöhung handelt.

9. Steuergerät, in welchem der Programmcode zur Durchführung der erfindungsgemäßen Verfahren hinterlegt ist.

## Claims

1. Method for detecting an imbalance angle variable which describes the azimuthal angular position of a wheel imbalance in a wheel of a vehicle, in which
- the presence of a wheel imbalance is detected (101) on the basis of the output signals of a wheel rotational speed sensor which is assigned to the wheel,
- at least one vehicle movement dynamics variable which describes the instantaneous driving situation is determined (102),
**characterized in that**
- a first angular variable which describes the azimuthal angle between the wheel imbalance and the wheel rotational speed sensor is determined as a function of the vehicle movement dynamics variable,
- a second angular variable which describes the azimuthal angle between the wheel rotational speed sensor and a reference point on the wheel is determined, and
- an imbalance angular variable which describes the azimuthal angle between the wheel imbalance and the reference point on the wheel is determined (103) as a function of the first angular variable and the second angular variable.

2. Method according to Claim 1, **characterized in that** the first angular variable is determined from the at least one vehicle movement dynamics variable by means of a data base which is stored in the vehicle or is available in a wireless fashion.

3. Method according to Claim 1, **characterized in that** the vehicle movement dynamics variable is the longitudinal speed of the vehicle.

4. Method according to Claim 1, **characterized in that** the reference point is a wheel valve.

5. Method according to Claim 2, **characterized in that** the data base is determined on the basis of defined driving manoeuvres which are carried out with a vehicle of the respective type in an application phase, wherein in the vehicle a defined wheel imbalance is applied to a position which is defined with respect to the azimuthal angle between the reference imbalance and the reference point, on at least one wheel.

6. Method according to Claim 5, **characterized in that** the defined driving manoeuvres comprise travel intervals with a value of the vehicle movement dynamics variable which is constant during the travel interval, wherein the constant value is different in the in the different travel intervals.

7. Method according to Claim 1, **characterized in that** a wheel imbalance is detected as present when the output signal of the wheel rotational speed sensor supplies a fault which repeats at each revolution of the wheel.

8. Method according to Claim 7, **characterized in that** the fault is a brief signal overshoot.

9. Control device in which the programme code for carrying out the methods according to the invention is stored.

## Revendications

1. Procédé de détermination d'une grandeur d'angle de déséquilibre décrivant la position angulaire azimutale d'un balourd de roue au niveau d'une roue sur un véhicule, avec lequel
- la présence d'un balourd de roue est détectée (101) à l'aide des signaux de sortie d'un capteur de vitesse de rotation de roue associé à la roue,
- au moins une grandeur dynamique de conduite décrivant la situation de conduite momentanée est déterminée (102),
**caractérisé en ce que**
- une première grandeur d'angle, qui décrit l'angle azimutal entre le balourd de roue et le capteur de vitesse de rotation de roue, est déterminée en fonction de la grandeur dynamique de conduite,
- une deuxième grandeur d'angle, qui décrit l'angle azimutal entre le capteur de vitesse de rotation de roue et un point de référence sur la roue, est déterminée et
- une grandeur d'angle de déséquilibre, qui décrit l'angle azimutal entre le balourd de roue et le point de référence sur la roue, est déterminée (103) en fonction de la première grandeur d'angle et de la deuxième grandeur d'angle.

2. Procédé selon la revendication 1, **caractérisé en ce que** la première grandeur d'angle est déterminée à partir de l'au moins une grandeur dynamique de conduite au moyen d'une base de données stockée dans le véhicule ou disponible par un moyen sans fil.

3. Procédé selon la revendication 1, **caractérisé en ce que** la grandeur dynamique de conduite est la vitesse longitudinale du véhicule.

4. Procédé selon la revendication 1, **caractérisé en ce que** le point de référence est une valve de roue.

5. Procédé selon la revendication 2, **caractérisé en ce que** la base de données est créée à l'aide de manœuvres de conduite définies qui sont accomplies avec un véhicule du type concerné dans une phase d'application, un balourd de roue défini étant appliqué au niveau du véhicule sur au moins une roue, à une position définie relative à l'angle azimutal entre le balourd de roue et le point de référence.

6. Procédé selon la revendication 5, **caractérisé en ce que** les manœuvres de conduite définies comprennent des intervalles de conduite avec une valeur de la grandeur dynamique de conduite constante pendant l'intervalle de conduite, la valeur constante étant différente dans les dans les différents intervalles de conduite.

7. Procédé selon la revendication 1, **caractérisé en ce qu'**un balourd de roue est détecté comme étant présent lorsque le signal de sortie du capteur de vitesse de rotation de roue délivre une perturbation qui se répète à chaque tour de roue.

8. Procédé selon la revendication 7, **caractérisé en ce que** la perturbation est une surélévation de courte durée du signal.

9. Contrôleur, dans lequel est stocké le code de programme destiné à mettre en œuvre le procédé selon l'invention.
